# EUROPEAN PATENT SPECIFICATION

(11) **EP 2 794 247 B1**
(45) Date of publication and mention of the grant of the patent: **27.07.2016**
(21) Application number: 13759870.2
(22) Date of filing: 28.08.2013
(51) Int. Cl.: B29D 30/00

(54) **DEVICE FOR PROVIDING A TIRE BEAD TO A NUMBER OF WORKSTATIONS**
VORRICHTUNG ZUM BEFÖRDERN EINES REIFENWULSTKERNS ZU EINER MEHRZAHL VON ARBEITSSTATIONEN
DISPOSITIF POUR TRANSPORTER UN BOURRELET DE PNEU À UNE PLURALITÉ DE STATIONS DE TRAVAIL

(30) Priority: 28.08.2012 NL 2009373
(43) Date of publication of application: 29.10.2014
(73) Proprietor: VMI Holland B.V., 8161 RK Epe (NL)
(72) Inventor: SLOT, Marco, NL-9431 HT Westerbork (NL); VAN LAAR, Gerardus Johannes Catharina, NL-3925 BZ Scherpenzeel (NL)
(74) Representative: Peters, Sebastian Martinus
(86) International application number: PCT/NL2013/050620
(87) International publication number: WO 2014/058303

(56) References cited:
- US-A- 4 354 892
- US-A- 4 468 266
- US-A- 5 080 738
- US-A1- 2007 215 265

## Description

### BACKGROUND

The invention relates to a device for providing a bead to a number of workstations, said device comprising a frame and a turret rotatable relative to said frame around an indexing axis between one or more predetermined positions relative to said frame, said turret comprising arms extending substantially radially relative to said indexing axis and being provided with bead-holding members for holding a substantially circular bead, wherein each of said bead-holding members is adapted to rotate around an associated axis of rotation for rotating a bead around its center.

Devices of this kind, comprising at least some of the above described features, are for instance known from US 5080738-A, US2007/0215265-A, US 4468266-A, and US 4354892-A.

In particular the present invention relates to such device, in which said movement of said bead-holders relative to said device is driven substantially externally from said turret, i.e. by means of actuators that do not rotate together with the turret around the indexing axis.

US Patent no 4,798,276 describes an apparatus for shaping a tire, said apparatus comprising turret means to be rotated about an index axis, and a plurality of drive units affixed to said turret means and adapted to be rotated therewith about said index axis and positioned at a plurality of workstations around said turret means having control means associated with at least one of said drive units which is responsive to the workstation at which said drive unit is positioned, wherein a drive member is associated with at least one of said drive units which frictionally engages a drive member at the workstation at which said drive unit is positioned, and tire retaining means associated with said drive units. A disadvantage of the prior art invention is that the orientation of a tire relative to the turret may change in an unpredictable manner, e.g. when a first workstation splices a tire-part held by a tire retaining member at a certain orientation relative to the turret, then this orientation may have changed unpredictably when the tire retaining means holding the tire reaches the next work station. Moreover, the prior art apparatus has a complex construction, as it requires a variety of pulleys and clutches as well as a brake assembly to be mounted on the rotatable turret for operating the tire retaining members to clamp a tire or let go of a tire, and for transferring a driving motion from the drive means to the drive units.

It is an object of the present invention to provide a turret having a simplified construction in which the orientation of a tire or part thereof, such as a bead, does not change between positions of rotation of the turret around its indexing axis.

### SUMMARY OF THE INVENTION

According to a first aspect, the present invention provides a device for providing a bead to a number of workstations as defined in claim 1, said device comprising a frame and a turret rotatable relative to said frame around an indexing axis between one or more predetermined positions relative to said frame, said turret comprising arms extending substantially radially relative to said indexing axis and being provided with bead-holding members for holding a substantially circular bead, wherein each of said bead-holding members is adapted to rotate around an associated axis of rotation for rotating a bead around its center, wherein each of said bead-holding members is provided with a blocking member moveable between a blocking position in which it blocks rotation of said bead-holding member around its associated axis of rotation with respect to the turret, and a non-blocking position in which it does not block said rotation of said bead-holding member around its associated axis of rotation. The present invention thus provides a device in which rotation of a bead around the center of the bead may be selectively blocked, said device in particular having a simple construction. The blocking member is preferably a passive blocking member, i.e. does not require to be powered to retain its blocking or non-blocking position, especially when the turret is rotating relative to the frame. Preferably the arms are connected to the turret to move together with said turret around the indexing axis.

Preferred embodiments are described in the attached claims 2 to 17, which are described in more detail below.

In an embodiment said device further comprises a blocking actuator arranged rotationally fixed relative to said frame and adapted for moving said blocking member into said blocking position or said non-blocking position when said turret is in one of said one or more predetermined positions. Because the blocking actuator is arranged rotationally fixed relative to the frame, i.e. does not rotate together with the turret, the turret may be constructed without any actuator for actuating said blocking member. This is particularly advantageous when the turret is infinitely rotatable around its indexing axis, as the device may thus function without any rotary couplings between the frame and the turret for controlling and/or powering an actuator. The device may also function without any actuators on the turret itself, i.e. when actuators for driving movement relative to the turret are external and rotationally-free relative to the turret.

Preferably, all actuation of the arms and/or said blocking member of the turret may be performed using actuators which are rotationally fixed with respect to the frame and which do not rotate together with the turret.

In an embodiment said blocking actuator is adapted to be uncoupled from said blocking member when said turret is not in one of said one or more predetermined positions, preferably wherein said blocking actuator is uncoupled from said turret when said turret is not in one of said one or more predetermined positions. The one or more predetermined positions typically correspond to positions of workstations arranged around the device. According to this embodiment, during rotation of the turret relative to the frame, the turret does not have to carry the weight of an actuator for actuating the blocking means, and rotary couplings for controlling and/or powering such an actuator may be omitted.

In an embodiment each of said bead-holding members is moveable relative to said turret in a direction perpendicular to a plane in which to hold said circular bead, said blocking members each comprising an anti-rotation pin and an accommodation section for said pin, wherein said anti-rotation pin is fixedly attached to said bead-holding member and said accommodation section is fixedly attached to said turret, or *vice versa.* When the anti-rotation pin is accommodated in the accommodation section of the turret, in other words engages the accommodation section, then rotation of the bead-holding member relative to the turret is blocked. Likewise, when the anti-rotation pin is not accommodated in, or engaging, the accommodation section, the bead-holding member is substantially free to rotate relative to the turret, and a bead held thereby may rotate around its center. Moreover, the rotation of the bead-holding member relative to the turret is predetermined when the anti-rotation pin for such a bead-holding member is accommodated in its corresponding accommodation section. Preferably, each of said bead-holding members is moveable relative to said turret in a direction perpendicular to the indexing axis, and preferably the plane in which to hold said circular bead extends substantially parallel to the indexing axis.

In an embodiment each arm further comprises a mechanical link connected to said bead-holding member and extending from said bead-holding member towards said indexing axis, wherein movement of said link relative to said bead-holding member causes said bead holding member to assume either a clamping or a non-clamping configuration. The mechanical link, which preferably extends substantially within its corresponding arm, rotates along with said turret around said indexing axis and may for instance comprise a push-bar, a wire or a chain. Clamping or unclamping of the bead-holding members may thus be driven via the mechanical link by actuators external to the turret. Typically, the bead-holding members comprise a plate and a number of segments which are moveable radially and parallel relative to said plate such that said bead-holding member can assume either a clamping configuration for clamping a bead, in which the segments are moved away from each other, and a non-clamping configuration for releasing a bead, in which said segments are moved closer to each other.

In an embodiment said bead-holding members comprise a biasing element, such as a spring, for applying a clamping force to a bead for holding said bead. Thus, once the bead-holding members clamp a bead, they will continue to clamp the bead unless actuated to release the bead; no actuators are required on the turret for keeping a bead clamped by a bead-holding member, even during rotation of the turret around the indexing axis.

In an embodiment the device further comprises a link actuator arranged rotationally fixed relative to said frame, for driving movement of said mechanical link to cause one of said holding members to assume either a clamping or a non-clamping configuration when said turret is in one of said one or more predetermined positions. As the link actuator does not have to be supported on the turret, but is preferably supported by said frame, rotary couplings between the turret and the base, and/or rotary power or control connections with the turret may be omitted. The embodiment thus provides a device of a simple construction. Preferably the actuator is adapted to move the mechanical link to act against said biasing element of a bead-holding member, for driving movement of the mechanical link to cause a bead-holding member to assume a non-clamping configuration.

In an embodiment, the device comprises a number of one or more such link actuators, wherein said number is less than or equal to the number of said predetermined positions. For instance, when there are multiple, e.g. four, of said predetermined positions for the turret corresponding to different work stations, it may be sufficient to provide a link actuator for only one or two of those positions corresponding to workstations which provide a bead to and/or remove a bead from bead-holding members. Preferably, the number of link actuators is less than the number of pre-determined positions.

In an embodiment, when said turret is not in one of said one or more predetermined positions, said mechanical link is substantially uncoupled from said link-actuator. When the turret is not in one of said one or more predetermined positions, the link actuator may thus be rotationally uncoupled from the turret and/or spaced apart from the turret.

In an embodiment each said mechanical link of said arms comprises a distal end facing said indexing axis, wherein said link actuator is arranged, at least in projection on a plane normal to said indexing axis, within an area spanned by said distal ends of said mechanical links. This embodiment provides a device requiring only a small footprint. Moreover, the link actuator(s) may thus be arranged substantially within the frame, such that the frame may substantially shield the link actuator(s) from outside influences. The risk of body parts or undesired items or dirt coming into contact with the link actuators is thus reduced.

In an embodiment wherein said link actuator comprises a wedge which is moveable for driving movement of a mechanical link of said arms when said turret is in one of said one or more predetermined positions. In this embodiment, the link actuator is preferably a linear actuator, for instance a pressure cylinder, for driving movement of the wedge.

In an embodiment said frame comprises a guide defining a circumferential guide path, said guide comprising one or more guide sections moveable relative to said guide path, wherein said arms comprise follower elements adapted for cooperation with said guide, and wherein movement of said follower elements is substantially confined by said guide. The guide path is typically spaced apart from the indexing axis. When the arms are connected to the turret to move with the turret around the indexing axis, the arms will move according to the path followed by the follower elements of the arms in the guide. When a follower element of an arm is in a guide section and the guide section is moved relative to the guide path, the arm and its bead-holding member will be moved together with the guide section. This may for instance result in the blocking member for said bead-holding member moving from a blocking position to a non-blocking position, or *vice versa.*

In an embodiment the guide is adapted for confining movement of the follower element in a direction away from the indexing axis. The follower element and arm connected thereto are thus prevented from moving radially away from the indexing axis when the follower element is located within the guide, e.g. during rotation of the turret around the indexing axis.

In an embodiment said device further comprises a guide actuator for moving a guide section of said guide relative to said guide path, wherein said guide actuator is arranged rotationally fixed relative to said frame. The guide actuator may be or may comprise the blocking actuator. This embodiment allows movement of a follower of an arm away from the guide path, and thus movement of the arm relative to the turret, without the use of a guide actuator or blocking actuator which is placed on the turret or connected thereto in a rotationally fixed manner.

In an embodiment said guide is substantially rotationally fixed relative to said frame. Preferably, a moveable guide section of said guide is arranged at at least one of said one or more predetermined positions.

In an embodiment said guide is a guide ring and said guide path is a circular path having a center, wherein said one or more guide sections are moveable radially relative to said center. Movement of said follower elements in a direction perpendicular to said center axis is substantially confined by said guide ring.

In an embodiment said turret comprises an abutment member for abutting said arm and arranged for confining movement of the follower element in a direction towards said indexing axis. Thus, when the arm abuts the abutment member during rotation of the turret around the indexing axis, further movement of the arm and follower element connected thereto towards the indexing axis is substantially blocked.

In an embodiment said guide comprises an inner portion for confining movement of said follower element towards said indexing axis, and an outer portion spaced apart from said inner portion for confining movement of said follower element away from said indexing axis. When the follower element is between the inner portion and outer portion of the guide, radial movement relative to the indexing axis of the follower element and arm connected thereto is substantially blocked.

In an embodiment, when said turret is not in one of said one or more predetermined positions, said bead-holding members are substantially uncoupled from actuators for actuating said bead-holding members to change their position and/or configuration relative to said turret.

In an embodiment said turret is free from actuators and/or rotary couplings with said frame for driving said bead-holding members to change their position and/or configuration relative to said turret.

In an embodiment the device further comprises a motor for driving rotation of the turret around the indexing axis. The device is thus capable of rotating the turret without requiring any external devices. The motor is typically attached to the frame in a rotationally fixed manner such that the turret does not have to support the motor. Preferably the motor is completely arranged within an area spanned by the arms, e.g. such that when projected perpendicularly on a plane spanned by the arms, the motor is completely within a hull spanned by the outer distal ends of said arms.

In a preferred embodiment the motor is arranged in a direct-drive arrangement. Thus, the amount of moving parts is reduced.

In an embodiment each of said bead-holding members is arranged for holding a bead in a plane substantially perpendicular to its axis of rotation.

Preferably in any of the embodiments described herein, the link actuator, the blocking actuator and/or the guide actuator are linear actuators, preferably fluid powered linear actuators, more preferably pneumatic powered linear actuators.

According to another aspect, the present invention provides a bead apex forming assembly as defined in claim 18, comprising a device as described above, further comprising multiple workstations arranged around said device, wherein at least one of said multiple workstations is arranged for providing a substantially circular bead to at least one of said arms, and wherein at least one of said multiple workstations is arranged for applying an apex to said bead.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 schematically shows a cross-sectional top view of a device according to the present invention,
Figure 2A schematically shows a partially cut-away side view along line II-II of the device of figure 1,
Figure 2B schematically shows a partially cut-away side view of an alternative embodiment of a device of figure 1,
Figure 3A shows a detail of an arm of the device of figures 1 and 2, having a follower element and a mechanical link,
Figure 3B shows a detail of an alternative embodiment of an arm suitable for the device of figures 1 and 2,
Figures 4A and 4B show a detail of a guide for confining a follower element of an arm, and comprising a moveable guide section,
Figures 5A, 5B and 5C show a detail of an alternative embodiment of a guide for confining a follower element of an arm, and comprising a moveable guide section.

### DETAILED DESCRIPTION OF THE INVENTION

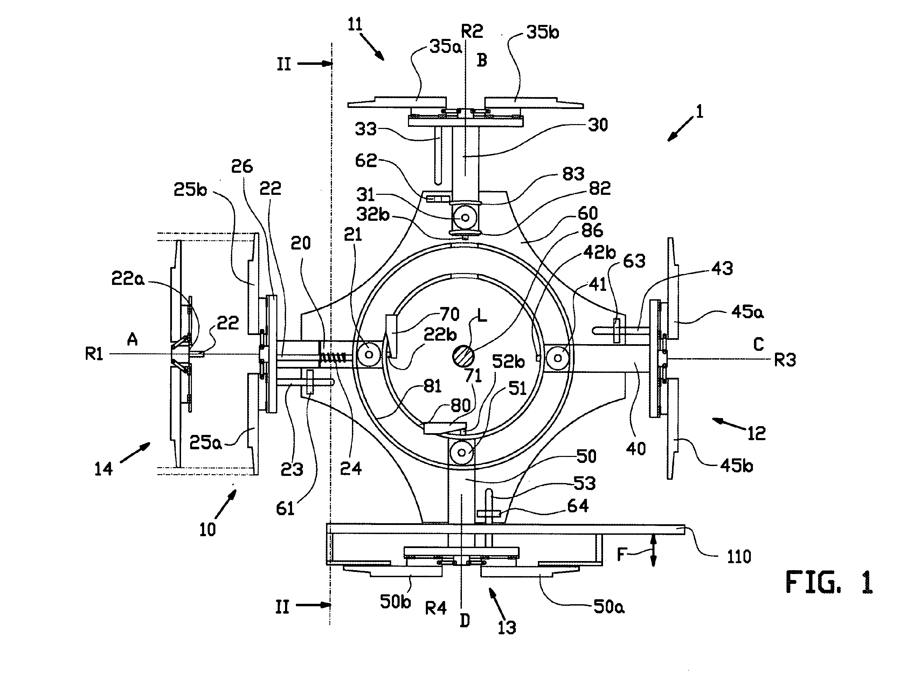

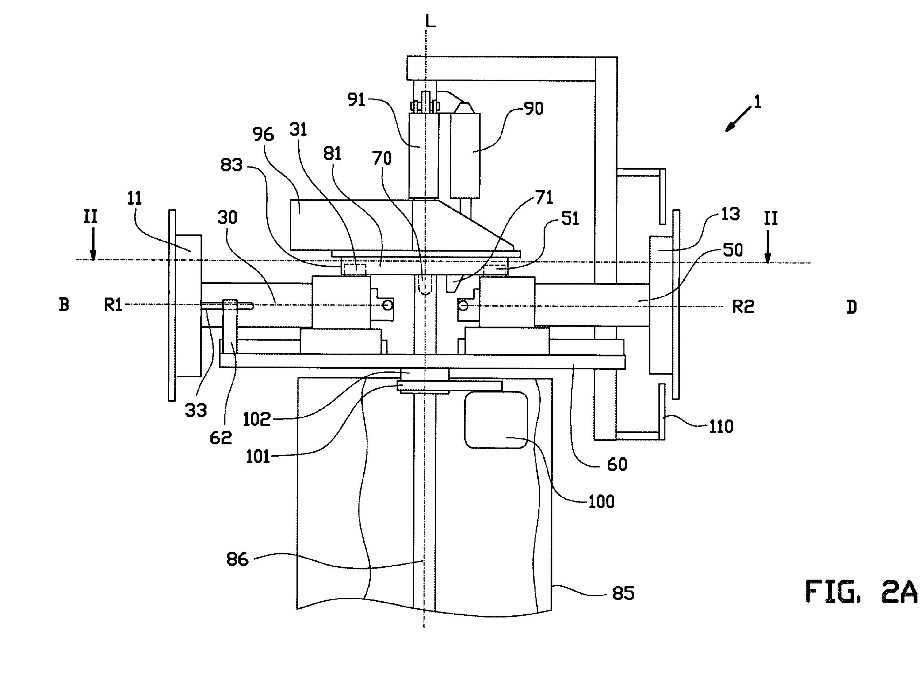

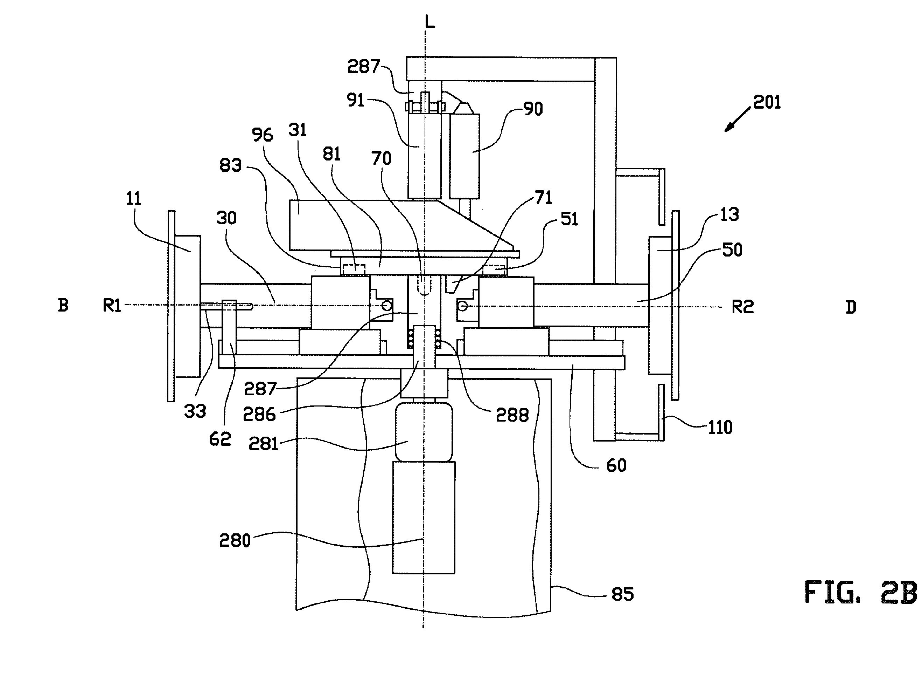

Figure 1 shows a cross-sectional top view of a device 1 according to the present invention. The device 1 comprises an axle 86, which forms part of a frame (see figure 2) for supporting a turret 60, which frame is preferably fixed to a floor. The turret 60 comprises four arms 20,30,40,50, here shown at respective predetermined positions A,B,C and D, and is rotatable relative to said axle 86 around an indexing axis L which intersects the center of said axle 86. The turret is continuously rotatable in a direction of rotation, such that arm 20 may first be at position A, as shown, and be subsequently moved to positions B,C, and D, before arriving at position A again.

The arms 20,30,40,50 comprise respective bead-holding members 10,11,12,13, adapted for holding a bead. In principle, the bead-holding members 10,11,12 and 13 are rotatable relative to the turret 60 around their respective associated axes of rotation R1,R2,R3 and R4, and said bead holding members 10,11,12,13 are in principle also moveable axially along their associated axes of rotation relative to the turret 60. However, in figure 1 bead-holding members 10,12 and 13 are blocked from rotating around their associated axes of rotation R1,R3,R4 by respective blocking members 23,61, 43,63 and 53,64. The blocking members each comprise an anti-rotation pin 23,43,53 which are fixedly attached to their corresponding bead-holding members 10,12,13, and each further comprise an accommodation section 61,63,64 for said pins 23,43,53, which accommodation sections are fixedly attached to the turret 60. When a pin, e.g. pin 23 is accommodated in its accommodation section 61, as shown, rotation of the corresponding bead-holding member 10 around its axis R1 is blocked. Rotation of bead-holding member 12,13 is blocked in a similar manner.

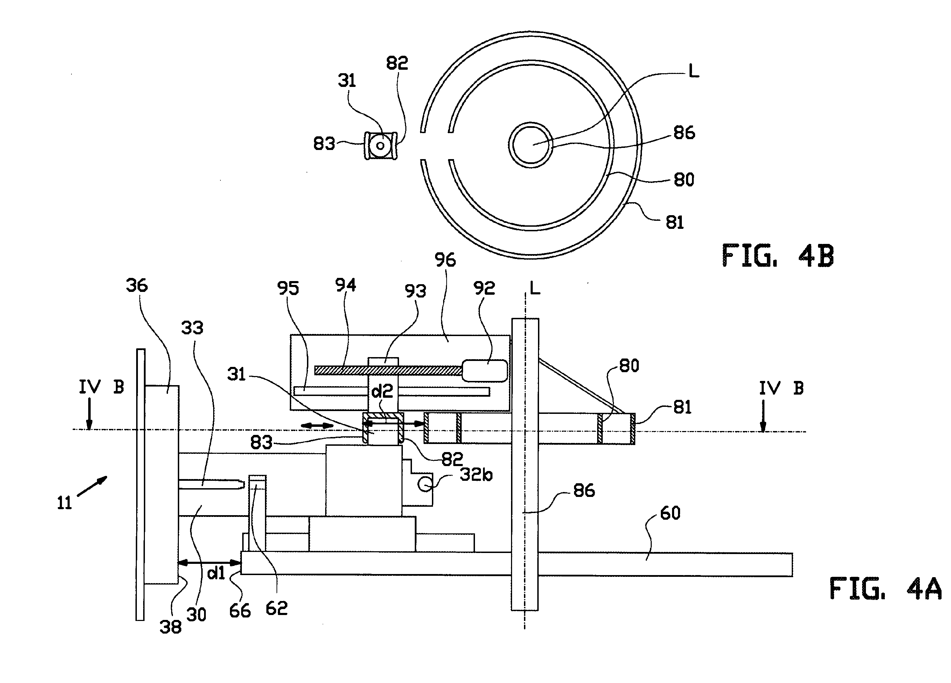

The arms 20,30,40,50 further comprise respective follower elements 21,31,41,51 for following a circumferential guide path defined by a guide ring 80,81 during rotation of the turret around the indexing axis L. The guide ring 80,81 comprises an inner portion, i.e. inner circumferential wall 80, and an outer portion, i.e. outer circumferential wall 81, between which walls the follower elements, here in the form of rollers 21,31,41,51 are confined. The guide ring comprises a moveable guide section or segment 82,83, which is moveable with respect to the path defined by the guide ring 80,81. Thus, when a follower element is at a point in said path corresponding to said guide section 82,83, the follower element may be moved away from said path. In figure 1, follower element 31 has been moved away from the guide path as a result of radial movement of guide section 82,83 relative to said indexing axis L. Because the follower element 31 has been moved radially away from the indexing axis L, the anti-rotation pin 33 has been moved away from the accommodating section 62 on the turret as well, so that the pin 33 is not accommodated by said accommodating section, leaving the bead holding member 11 free to rotate relative to the turret 60. For placing the blocking members 23,61, 33,62, 43,63, and 53,64 in a blocking or a non-blocking position when the, the device 1 is provided with a blocking actuator, shown and described in relation to figures 2, 4A and 4B.

Though the arms 20,30,40,50 are of a substantially same construction, for reasons of clarity, some details are only shown for arm 20. The bead holder 10 of arm 20 comprises a base plate 26 which supports a number of bead-holder segments 25a,25b. The bead holder segments 25a,25b may be moved parallel to said plate 26 away from each other, for clamping a bead, or be moved closer to each-other, for releasing a bead. In figure 1, bead-holding members 10,11,12,13 are all in a bead-clamping configuration. On the left of bead holding-member 10, a bead holding member 14 is shown, identical in construction to bead-holding member 10, but shown in a non-clamping configuration. When an arm is at position A, its bead-holding member can be urged into a non-clamping configuration via a mechanical link 22 in the form of a push-bar. The push-bar 22 is connected at one end 22a to the bead-holding member 10, and extends towards the axis of rotation L. The other 22b end of the push bar 22 is arranged close to a wedge 70. When an arm is at position A, movement of the wedge may thus drive movement of the push-bar relative to the bead-holding member, causing said bead-holding member 10 to assume a non-clamping configuration. The wedge 70 is attached to the frame of the device 1 in a rotationally fixed manner such that the wedge does not rotate together with the turret 60.

When the wedge is uncoupled or spaced apart from the end 22b of the mechanical link 22, the bead-holding member 10 is urged into a clamping configuration by a biasing element in the form of a spring 24 acting against the push-bar 22. Wedge 71 works in a similar fashion for an arm at position D. Thus, during rotation of the turret 60 around the indexing axis L, the bead-holding means 10,11,12,13 are biased for clamping a bead, while said bead may be released from said bead-holding means when said bead-holding means is at a predetermined position in which said wedge may cause movement of the mechanical link, i.e. when a bead holding means is at predetermined position A and D. Though not shown in detail, it will be obvious to the person skilled in the art that arms 30,40, and 50 comprise like structural elements as arm 20, e.g. also comprise mechanical links having respective distal ends 32b, 42b and 52b.

An exemplary method or process in which the device for providing a bead to a number of workstations is used is described hereafter. A workstation (not shown) close to position A provides a bead to a bead-holding member 10 at said position. Before the bead is held by the bead-holding member, the push-bar 22 connected to said bead-holding member 10 is moved to cause the bead-holding member to assume the non-clamping position. Next the bead is loaded onto the bead-holding member, and the push-bar 22 is moved to cause the bead-holding member 10 to assume a clamping position. During the time that the bead-holding member 10 is at position A, rotation of said bead holding member 10 is blocked by blocking means 23,61. Once the bead is loaded onto the bead holding member, the turret rotates said bead-holding member 10 together with the bead around the indexing axis L to the next position B.

During rotation of the bead-holding member from position A to position B, the guide section 82,83 remains aligned with the guide path defined by the guide 80,81. In other words, during rotation of the turret, the guide and the guide section define a circumferential circular path. Once the bead-holding member has reached position B, the guide section is moved radially away from the indexing axis L, such that the blocking member 33, 62 is moved to a non-blocking position. Next, a workstation close to position B applies an apex to the bead, during which the bead-holder preferably makes one or more times complete revolutions relative to the turret. Otherwise, the bead-holder is rotated after application of the apex until the blocking means may be moved to a blocking position. Next, the guide section is moved back in line with the rest of the guide.

Next the turret rotates around said indexing axis L to position the bead and apex applied thereto at position C, where a workstation stitches the apex to the bead. During stitching the bead-holding member is blocked from rotating relative to said turret. Alternatively, the workstation at position C may perform other of further operations on the bead and apex, such as turning over the apex.

Finally, the turret is rotated around said indexing axis L to position the bead and the apex stitched thereto at position D. The bead-holding member is urged to assume a non-clamping configuration using a wedge 71 which presses against the push-bar 52b, and the bead is pushed of the bead-holding member 13 by a push-finger 110 which is moveable along a direction F. It is noted that the finger 110 is not connected to the turret 60, i.e. does not rotate together with the turret 60 relative to the frame 85.

Figure 2A shows a partially cut-away side view of a device 1 according to the present invention. The device 1 comprises a frame 85, here shown partially cut away to show the interior thereof. The frame 85 comprises an axle 86 which supports a turret 60, which turret is rotatable relative to said frame 85 around an indexing axis L and here shown in a predetermined position relative to said frame. The turret 60 comprises and supports arms 30 and 50 and is coupled rotationally free to said axle 86 via a pulley 102. The frame 85 further supports a motor 100, connected to said pulley 102 via a belt 101, for driving rotation of the turret 60 around the indexing axis L.

Though the axle 86 has a longitudinal axis which coincides with said indexing axis L, the axle 86 is rotationally fixed relative to the rest of the frame 85. As will be explained in greater detail in reference to figures 4A and 4B, the device comprises a blocking or guide actuator 96 is adapted for moving a follower element, e.g. follower elements 31 or 51 shown in dotted lines, together with a section 83 of guide 80,81 to or from the indexing axis L. The guide actuator 96 is fixedly attached to the frame via axle 86 and does not rotate together with the turret.

The device 1 further comprises link actuators 90,91, in the form of fluid-driven cylinders, which are attached to the frame 85 in a rotationally fixed manner, in this case to the axle 86 thereof. Link actuators 90,91 are arranged for moving a respective wedge 70,71 along a direction parallel to the indexing axis L. When the actuator 90 is activated, the wedge 71 presses against a mechanical link (shown in figure 2) which is slidable along axis R2 arranged with respect to arm 50. The mechanical link is connected on one end to bead-holding member 13, and extends towards the indexing axis L. Activation of actuator 90 to move the mechanical link axially along axis R2 relative to the bead-holding member 13 causes said bead-holding member to assume either a clamping configuration or a non-clamping configuration. In the pre-determined position of the turret 60 relative to the frame 85, a bead-holding member may thus be controlled using actuator 90 or which is external to the turret 60 and does not rotate together with the turret around the indexing axis L.

Figure 2B shows a partially cut-away side view of an alternative embodiment of a device 201 according to the invention, in which a motor 281 directly drives rotation of the turret 60 relative to the frame 85, i.e. in a direct drive fashion without gears or pulleys for transferring motion from the rotor to turning axle 286. The motor 281 is fixedly supported on a support 280 of the frame 85 and drives rotation of the turning axle 286, which turning axle is connected to the turret 60 in a rotationally fixed manner. The actuators 90,91 and the push-finger 110 are connected to the device in a rotationally fixed manner relative to the frame 85 and therefore do not rotate together with the turret 60. Bearings 288 in frame portion 289 enable smooth rotation of the turning axle 286 and thus the turret relative to the frame 85. In this embodiment even fewer moving parts are required than in the embodiment of figure 2A.

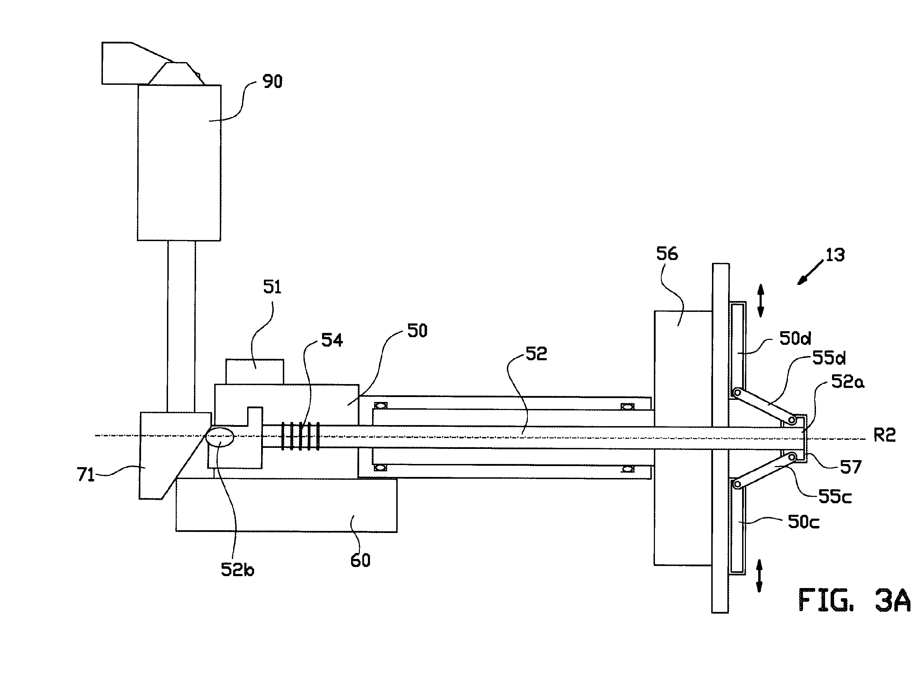

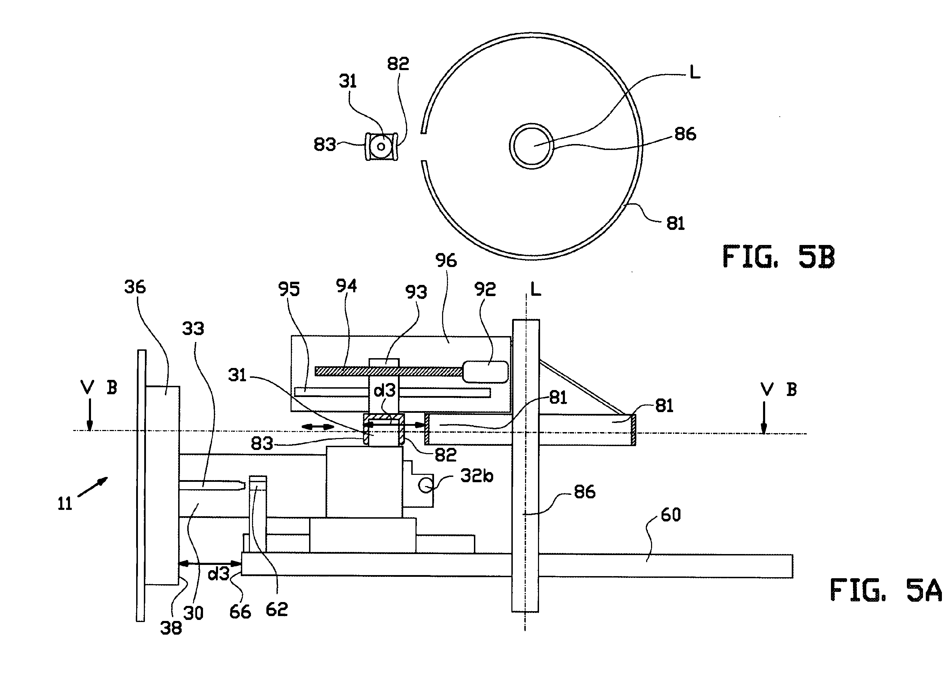

Figure 3A shows a cross-section of an arm and a link actuator in more detail. Arm 50 comprises a bead-holding member 13 comprising a base plate 56 and bead-holder segments 50c,50d. The bead holding member 13 is connected to a mechanical link 52 in the form of a push-bar 52 which extends in the interior of the arm towards the indexing axis (shown in figures 1 and 2). Movement of the push-bar along axis R2 causes pivoting movement of links 55d,55c which are connected to connection block 57 at distal end 52a of the push-bar 52. This in turn causes the bead segments to expand or contract, and thus the bead-holding member to assume a clamping or a non-clamping configuration. In figure 3A, the actuator 90 is shown pushing a wedge 71 against distal end 52b of the push-bar 52, such that the opposite distal end 52a of the push-bar 52 urges the bead-holding member 13 into the non-clamping configuration, e.g. for loading or releasing a bead. The arm 50 is movable axially along said axis R2 relative to said turret 60. To confine said axial movement of the arm, the arm 50 is provided with a follower element 51, for cooperation with a guide as described in more detail in figures 4A,4B and 5A,5B.

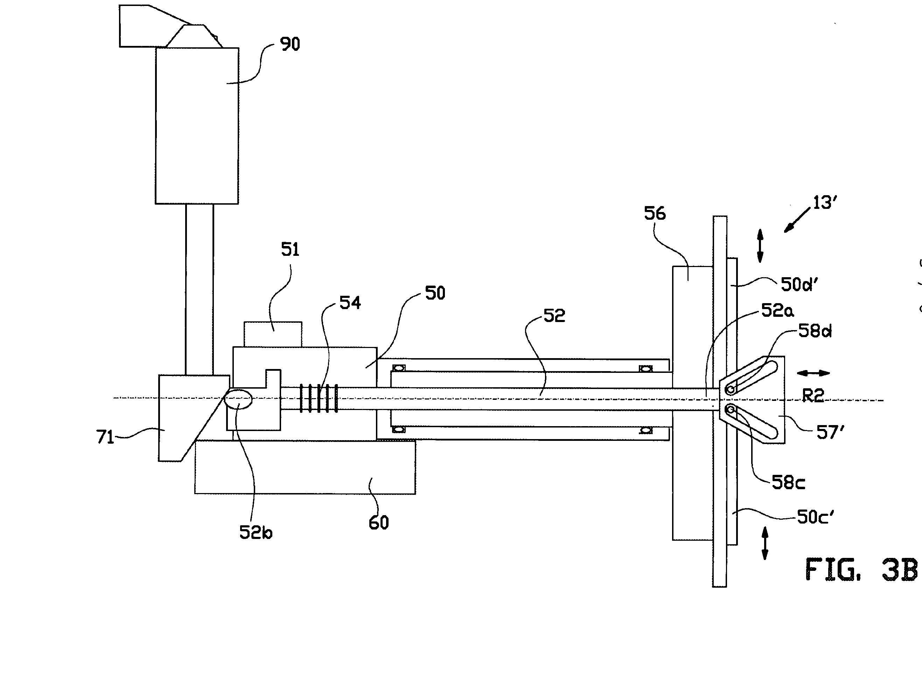

Figure 3B shows a cross-section of an alternative embodiment of an arm and a link actuator for use in the invention. In this embodiment, expansion and contraction of bead-holder segments 50c'and 50d' is achieved by moving a connection block 57' along the axis R2, using the push-bar 52. The bead-holder segments 50c',50d' are provided with respective pins 58c,58d, which are arranged within respective slots of the connection block 57', such that movement of the connection block 57'along axis R2 drives movement of the bead-holder segments 50c', 50d' relative to base plate 56 in a direction perpendicular to R2.

Figure 4A is a schematic cross-sectional side view of a portion of the device of figure 1, showing the blocking actuator 96 for driving movement of guide section 82,83. Blocking actuator 96 is fixedly attached to axle 86 and comprises a motor 92 connected to a screw 94. Rotation of the screw 94 drives movement of a block 93 along a linear guide 95. The block 93 is connected to the guide section 82,83, so that when the motor 92 be powered it drives movement of the guide section 82,83 radially towards or away from indexing axis L. When a follower element is confined in the guide section during movement of the guide section, the follower element 31 and the arm it belongs to are moved as well. When the arm is thus moved, base plate 36 and mechanical link 32 are moved together with the arm relative to the turret 60.

In figures 4A and 4B, the guide section 82,83 and follower element 31 of arm 30 have been moved such that rotation of bead-holding member 11 is not blocked by blocking members 33,62. In the embodiment shown, the guide section has been moved a distance d2 away from the indexing axis L. The bead holding member 11 has a side 38 facing the indexing axis L, and the turret 60 has a side 66 facing side 38 at a distance d1. As can be seen, when the guide section 82,83 has been moved away such that the follower element 31 is at the distance d2 from the path defined by the guide 80,81, distances d1 and d2 are not necessarily equal.

Figure 4B shows a cross section along line IVB-IVB of figure 4A, showing the guide 80,81, the guide section 82,83, the axle 86 and follower element 31. The guide section comprises an inner portion 82 and an outer portion 83 between which the follower element 31 is arranged such that the follower element 31 will follow any movement of the guide section 82,83 when the follower element 31 is in the guide section, whether said movement is towards or away from the indexing axis L.

Figure 5A schematically shows a cross-sectional side view of an alternative embodiment, in which the guide 81 confines movement of the follower element 31 away from the indexing axis L, but does not confine movement of the follower element 31 towards the indexing axis L. Figure 5B shows a cross-section along line VB-VB of figure 5A. In figure 5A, the guide section 82,83 and follower element 31 have been moved away from the path defined by the guide 81 by a distance d3. Side 38 of the bead-holding member 11, which side 38 faces the indexing axis L, is at substantially the same distance d3 from side 66 of the turret 60, which side 66 faces side 38.

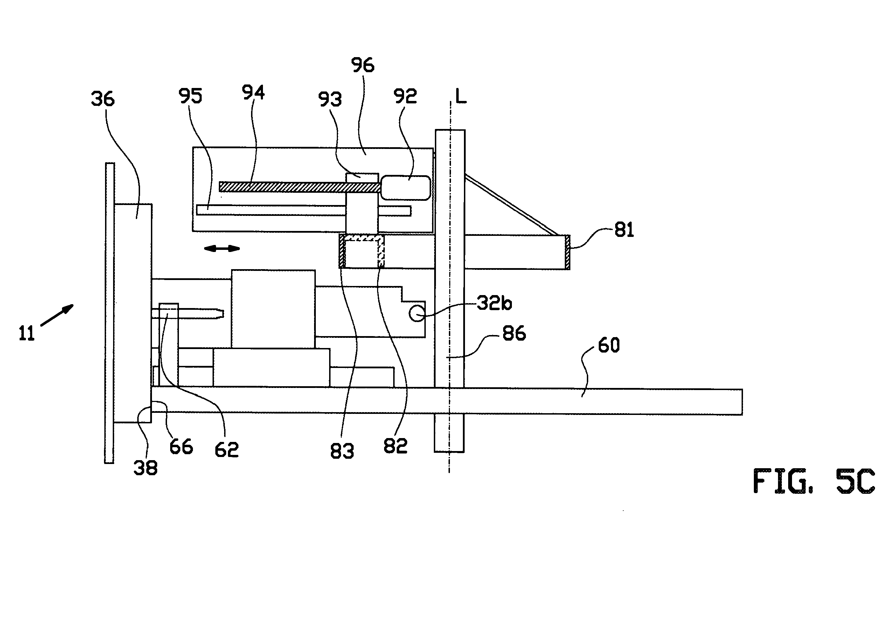

In figure 5C, the guide section 82,83 has been moved back such that part 83 is in line with the path defined by the guide 81, allowing rotation of the turret while the follower element is located with another section of the guide 81 than the guide section 83. In comparison to figure 5A the arm has thus been moved back said distance d3 towards the indexing axis L. Movement of the arm towards the indexing axis L is confined by sides 38 and 66, i.e. side 66 functions as an abutment member for side 38, and once these sides 38,62 abut further movement of the arm towards the indexing axis L is blocked.

Though in the embodiment shown, sides 38 and 66 limit movement of the arm, and thus the follower element 31, towards the indexing axis, other embodiments will be apparent to the person skilled in the art. Whenever there is an abutment member, e.g. a surface or structure, provided on the turret 60 for confining movement of the arm towards the indexing axis L, while at the same time the guide section is adapted for confining movement of the follower element, and thus the arm, away from the indexing axis, the arm may be moved between a predetermined extended position and a predetermined retracted position.

It is to be understood that the above description is included to illustrate the operation of the preferred embodiments and is not meant to limit the scope of the invention. From the above discussion, many variations will be apparent to one skilled in the art that would yet be encompassed by the spirit and scope of the present invention.

In summary, the invention relates to a device for providing a bead to a number of workstations, said device comprising a frame and a turret rotatable relative to said frame around an indexing axis between one or more predetermined positions relative to said frame, said turret comprising arms extending substantially radially relative to said indexing axis and being provided with bead-holding members for holding a substantially circular bead, wherein each of said bead-holding members is adapted to rotate around an associated axis of rotation for rotating a bead around its center. Preferably, the turret of the device is free from actuators.

## Claims

1. Device (1) for providing a bead to a number of workstations, said device comprising a frame and a turret (60) (86) rotatable relative to said frame around an indexing axis (L) between one or more predetermined positions (A,B,C,D) relative to said frame, said turret comprising arms (20,30,40,50) extending substantially radially relative to said indexing axis and being provided with bead-holding members (10,11,12,13) for holding a substantially circular bead, wherein each of said bead-holding members is adapted to rotate around an associated axis of rotation (R1,R2,R3,R4) for rotating a bead around its center,
**characterized in that** each of said bead-holding members is provided with a blocking member (23,61), (43,63), (53,64), (33,62) moveable between a blocking position in which it blocks rotation of said bead-holding member around its associated axis of rotation with respect to the turret, and a non-blocking position in which it does not block said rotation of said bead-holding member around its associated axis of rotation.

2. Device according to claim 1, wherein said device further comprises a blocking actuator arranged rotationally fixed relative to said frame and adapted for moving said blocking member into said blocking position or said non-blocking position when said turret is in one of said one or more predetermined positions, preferably wherein said blocking actuator is adapted to be uncoupled from said blocking member when said turret is not in one of said one or more predetermined positions, preferably wherein said blocking actuator is uncoupled from said turret when said turret is not in one of said one or more predetermined positions.

3. Device according to any one of the preceding claims, wherein each of said bead-holding members is moveable relative to said turret in a direction perpendicular to a plane in which to hold said circular bead, said blocking members each comprising an anti-rotation pin and an accommodation section for said pin, wherein said anti-rotation pin is fixedly attached to said bead-holding member and said accommodation section is fixedly attached to said turret, or *vice versa.*

4. Device according to any one of the preceding claims, wherein said bead-holding members comprise a biasing element for applying a clamping force to a bead for holding said bead.

5. Device according to any one of the preceding claims, wherein each arm further comprises a mechanical link connected to said bead-holding member and extending from said bead-holding member towards said indexing axis, wherein said link is movable relative to said bead-holding member for causing said bead holding member to assume either a clamping or a non-clamping configuration.

6. Device according to claim 5, further comprising a link actuator arranged rotationally fixed relative to said frame, for driving a movement of said mechanical link to cause one of said holding members to assume either a clamping or a non-clamping configuration, preferably when said turret is in one of said one or more predetermined positions, preferably wherein the link actuator is arranged on said frame, and wherein said link actuator is arranged for urging said bead-holding members into a clamping configuration for clamping a bead or a non-clamping configuration for releasing a bead.

7. Device according to claim 6, wherein, when said turret is not in one of said one or more predetermined positions, said mechanical link is substantially uncoupled from said link actuator.

8. Device according to claim 6 or 7, wherein each mechanical link of said arms comprises a distal end facing said indexing axis, wherein said link actuator is arranged, at least in projection on a plane normal to said indexing axis, within an area spanned by said distal ends of said mechanical links.

9. Device according to claim 6, 7 or 8, wherein said link actuator comprises a wedge which is moveable for driving a movement of said mechanical link of at least one of said arms when said turret is in one of said one or more predetermined positions.

10. Device according to any one of the preceding claims, wherein said frame comprises a guide defining a circumferential guide path, said guide comprising one or more guide sections moveable relative to said guide path,
wherein said arms comprise follower elements adapted for cooperation with said guide, and wherein movement of said follower elements is substantially confined by said guide.

11. Device according to claim 10, further comprising a guide actuator for moving at least one of said one or more guide sections of said guide relative to said guide path, preferably wherein said actuator is arranged rotationally fixed relative to said frame.

12. Device according to claim 10 or 11, wherein the guide is adapted for confining movement of the follower element in a direction away from the indexing axis, and/or wherein said guide is substantially rotationally fixed relative to said frame, and/or wherein said guide is a guide ring and said guide path is a circular path having a center, wherein said one or more guide sections are moveable radially relative to said center.

13. Device according to claim 10, 11 or 12, wherein said turret comprises an abutment member for abutting said arm and arranged for confining movement of the follower element in a direction towards said indexing axis.

14. Device according to any one of the claims 10 - 13, wherein said guide comprises an inner portion for confining movement of said follower element towards said indexing axis, and an outer portion spaced apart from said inner portion for confining movement of said follower element away from said indexing axis.

15. Device according to any one of the preceding claims, wherein, when said turret is not in one of said one or more predetermined positions, said bead-holding members are substantially uncoupled from actuators for actuating said bead-holding members to assume a position and/or configuration relative to said turret.

16. Device according to any one of the preceding claims, further comprising a motor for driving rotation of the turret around the indexing axis, preferably wherein said motor is arranged on said frame and in a direct-drive arrangement for driving a rotation of the turret.

17. Device according to any one of the preceding claims, wherein said turret is free from actuators and/or rotary couplings with said frame for driving said bead-holding members to assume a position and/or configuration relative to said turret.

18. Bead apex forming assembly comprising a device according to any one of the preceding claims, further comprising multiple workstations arranged around said device, wherein at least one of said multiple workstations is arranged for providing a substantially circular bead to at least one of said arms, and wherein at least one of said multiple workstations is arranged for applying an apex to said bead.

## Patentansprüche

1. Vorrichtung (1), um mehreren Arbeitsstationen einen Wulst bereit zu stellen, wobei die Vorrichtung einen Rahmen und einen Revolver (60), (86) umfasst, welcher relativ zu dem Rahmen um eine Indexachse (L) zwischen einer oder mehreren vorbestimmten Positionen (A, B, C, D) relativ zu dem Rahmen drehbar ist, wobei der Revolver Arme (20, 30, 40, 50) umfasst, welche sich im Wesentlichen radial relativ zu der Indexachse erstrecken, und mit Wulsthalteelementen (10, 11, 12, 13) zum Halten eines im Wesentlichen zirkularen Wulsts versehen sind, wobei jedes der Wulsthalteelemente dazu eingerichtet ist, um eine zugeordnete Rotationsachse (R1, R2, R3, R4) herum zu rotieren, um einen Wulst um dessen Zentrum zu rotieren,
**dadurch gekennzeichnet, dass** jedes der Wulsthalteelemente mit einem Blockierelement (23, 61), (43, 63), (53, 64), (33, 62) versehen ist, welches zwischen einer Blockierposition, in welcher dieses eine Rotation des Wulsthalteelements um dessen zugeordnete Rotationsachse herum bezüglich des Revolvers blockiert, und einer Nicht-Blockierposition, in welcher dieses die Rotation des Wulsthalteelements um dessen zugeordnete Rotationsachse herum nicht blockiert.

2. Vorrichtung nach Anspruch 1, wobei die Vorrichtung ferner einen Blockieraktuator umfasst, welcher relativ zu dem Rahmen drehfest angeordnet ist und zum Bewegen des Blockierelements in die Blockierposition oder die Nicht-Blockierposition eingerichtet ist, wenn der Revolver in einer der einen oder mehreren vorbestimmten Positionen ist, wobei der Blockieraktuator vorzugsweise dazu eingerichtet ist, von dem Blockierelement entkoppelt zu sein, wenn der Revolver nicht in einer der einen oder mehreren vorbestimmten Positionen ist, wobei der Blockieraktuator vorzugsweise von dem Revolver entkoppelt ist, wenn der Revolver nicht in einer der einen oder mehreren vorbestimmten Positionen ist.

3. Vorrichtung nach einem der vorhergehenden Ansprüche, wobei jedes der Wulsthalteelemente relativ zu dem Revolver in eine Richtung, welche rechtwinklig zu einer Ebene ist, in welcher der zirkulare Wulst zu halten ist, bewegbar ist, wobei die Blockierelemente jeweils einen Drehsicherungsstift und einen Aufnahmeabschnitt für den Stift umfassen, wobei der Drehsicherungsstift an dem Wulsthalteelement unbeweglich angebracht ist und der Aufnahmeabschnitt an dem Revolver unbeweglich angebracht ist, oder umgekehrt.

4. Vorrichtung nach einem der vorhergehenden Ansprüche, wobei die Wulsthalteelemente ein Vorspannelement zum Aufbringen einer Klemmkraft an einem Wulst zum Halten des Wulsts umfassen.

5. Vorrichtung nach einem der vorhergehenden Ansprüche, wobei jeder Arm ferner ein mechanisches Verbindungsstück umfasst, welches mit dem Wulsthalteelement verbunden ist und sich von dem Wulsthalteelement in Richtung der Indexachse erstreckt, wobei das Verbindungsstück relativ zu dem Wulsthalteelement bewegbar ist, um das Wulsthalteelement zu veranlassen, entweder eine Klemmkonfiguration oder eine Nicht-Klemmkonfiguration einzunehmen.

6. Vorrichtung nach Anspruch 5, ferner umfassend einen relativ zu dem Rahmen drehfest angeordneten Verbindungsstückaktuator zum Antreiben einer Bewegung des mechanischen Verbindungsstücks, um eines der Halteelemente zu veranlassen, entweder eine Klemm- oder Nicht-Klemmkonfiguration einzunehmen, vorzugsweise, wenn der Revolver in einer der einen oder mehreren vorbestimmten Positionen ist, wobei der Verbindungsstückaktuator vorzugsweise an dem Rahmen angeordnet ist, und wobei der Verbindungsstückaktuator zum Drängen der Wulsthalteelemente in eine Klemmkonfiguration zum Klemmen eines Wulsts oder in eine Nicht-Klemmkonfiguration zum Lösen eines Wulsts angeordnet ist.

7. Vorrichtung nach Anspruch 6, wobei, wenn der Revolver nicht in einer der einen oder mehreren vorbestimmten Position ist, das mechanische Verbindungsstück im Wesentlichen von dem Verbindungsstückaktuator entkoppelt ist.

8. Vorrichtung nach Anspruch 6 oder 7, wobei jedes mechanische Verbindungsstück der Arme ein distales Ende umfasst, welches der Indexachse zugewandt ist, wobei der Verbindungsstückaktuator wenigstens in Projektion an einer zu der Indexachse senkrechten Ebene innerhalb eines durch die distalen Enden der mechanischen Verbindungsstücke aufgespannten Bereichs angeordnet ist.

9. Vorrichtung nach Anspruch 6, 7 oder 8, wobei der Verbindungsstückaktuator einen Keil umfasst, welcher zum Antreiben einer Bewegung des mechanischen Verbindungsstücks von wenigstens einem der Arme bewegbar ist, wenn der Revolver in einer der einen oder mehreren vorbestimmten Positionen ist.

10. Vorrichtung nach einem der vorhergehenden Ansprüche, wobei der Rahmen eine Führung umfasst, welche einen Umlaufführungspfad definiert, wobei die Führung eine oder mehrere Führungsabschnitte umfasst, welche relativ zu dem Führungspfad bewegbar sind,
wobei die Arme Mitläuferelemente umfassen, welche zum Zusammenwirken mit der Führung eingerichtet sind, und wobei eine Bewegung der Mitläuferelemente im Wesentlichen durch die Führung begrenzt ist.

11. Vorrichtung nach Anspruch 10, ferner umfassend einen Führungsaktuator zum Bewegen mindestens eines des einen oder der mehreren Führungsabschnitte der Führung relativ zu dem Führungspfad, wobei der Aktuator vorzugsweise relativ zu dem Rahmen drehfest angeordnet ist.

12. Vorrichtung nach Anspruch 10 oder 11, wobei die Führung dazu eingerichtet ist, eine Bewegung des Mitläuferelements in eine sich von der Indexachse entfernenden Richtung zu begrenzen, und/oder wobei die Führung relativ zu dem Rahmen im Wesentlichen drehfest ist, und/oder wobei die Führung ein Führungsring ist und der Führungspfad ein zirkularer Pfad ist, welcher ein Zentrum aufweist, wobei der eine oder die mehreren Führungsabschnitte relativ zu dem Zentrum radial bewegbar sind.

13. Vorrichtung nach Anspruch 10, 11 oder 12, wobei der Revolver ein Anschlagelement zum Anschlagen des Armes umfasst und dazu eingerichtet ist, eine Bewegung des Mitläuferelements in einer Richtung zu der Indexachse zu begrenzen.

14. Vorrichtung nach einem der Ansprüche 10-13, wobei die Führung einen inneren Teilabschnitt zum Begrenzen einer Bewegung des Mitläuferelements in Richtung zu der Indexachse und einen äußeren Teilabschnitt umfasst, welcher von dem inneren Teilabschnitt beabstandet ist, um eine Bewegung des Mitläuferelements von der Indexachse weg zu begrenzen.

15. Vorrichtung nach einem der vorhergehenden Ansprüche, wobei, wenn der Revolver nicht in einer der einen oder mehreren vorbestimmten Positionen ist, die Wulsthalteelemente im Wesentlichen von Aktuatoren zum Antreiben der Wulsthalteelemente entkoppelt sind, um eine Position und/oder Konfiguration relativ zu dem Revolver einzunehmen.

16. Vorrichtung nach einem der vorhergehenden Ansprüche, ferner umfassend einem Motor zum Antreiben einer Drehbewegung des Revolvers um die Indexachse, wobei der Motor vorzugsweise an dem Rahmen und in einer direkten Antriebsanordnung zum Antreiben einer Drehbewegung des Revolvers angeordnet ist.

17. Vorrichtung nach einem der vorhergehenden Ansprüche, wobei der Revolver zum Antreiben der Wulsthalteelemente frei ist von Aktuatoren und/oder drehbaren Kopplungen mit dem Rahmen, um eine Position und/oder Konfiguration relativ zu dem Revolver einzunehmen.

18. Wulst-Apex-Ausbildungsanordnung, umfassend eine Vorrichtung nach einem der vorhergehenden Ansprüche, ferner umfassend mehrere Arbeitsstationen, welche um die Vorrichtung herum angeordnet sind, wobei wenigstens eine der mehreren Arbeitsstationen zum Bereitstellen eines im Wesentlichen zirkularen Wulsts zu wenigstens einem der Arme vorgesehen ist, und wobei wenigstens eine der mehreren Arbeitsstationen zum Anbringen eines Apex an den Wulst angeordnet ist.

## Revendications

1. Dispositif (1) pour fournir un bourrelet à un certain nombre de postes de travail, ledit dispositif comprenant un bâti et une tourelle (60) (86) pouvant tourner par rapport audit bâti autour d'un axe d'indexation (L) entre une ou plusieurs positions (A, B, C, D) prédéterminées par rapport audit bâti, ladite tourelle comprenant des bras (20, 30, 40, 50) s'étendant sensiblement radialement par rapport audit axe d'indexation et étant prévus avec des éléments de maintien de bourrelet (10, 11, 12, 13) pour maintenir un bourrelet sensiblement circulaire, dans lequel chacun desdits éléments de maintien de bourrelet est adapté pour tourner autour d'un axe de rotation (R1, R2, R3, R4) associé pour faire tourner un bourrelet autour de son centre,
**caractérisé en ce que** chacun desdits éléments de maintien de bourrelet est prévu avec un élément de blocage (23, 61), (43, 63), (53, 64), (33, 62) mobile entre une position de blocage dans laquelle il bloque la rotation dudit élément de maintien de bourrelet autour de son axe de rotation associé par rapport à la tourelle, et une position sans blocage sans laquelle il ne bloque pas ladite rotation dudit élément de maintien de bourrelet autour de son axe de rotation associé.

2. Dispositif selon la revendication 1, dans lequel ledit dispositif comprend en outre un actionneur de blocage agencé en rotation, de manière fixe par rapport audit bâti et adapté pour déplacer ledit élément de blocage dans ladite position de blocage ou ladite position sans blocage lorsque ladite tourelle est dans l'une desdites une ou plusieurs positions prédéterminées, de préférence dans lequel ledit actionneur de blocage est adapté pour être découplé dudit élément de blocage lorsque ladite tourelle n'est pas dans l'une desdites une ou plusieurs positions prédéterminées, de préférence dans laquelle ledit actionneur de blocage est découplé de ladite tourelle lorsque ladite tourelle n'est pas dans l'une desdites une ou plusieurs positions prédéterminées.

3. Dispositif selon l'une quelconque des revendications précédentes, dans lequel chacun desdits éléments de maintien de bourrelet est mobile par rapport à ladite tourelle dans une direction perpendiculaire à un plan dans lequel, pour maintenir ledit bourrelet circulaire, lesdits éléments de blocage comprenant chacun une broche anti-rotation et une section de logement pour ladite broche, dans lequel ladite broche anti-rotation est attachée, de manière fixe, audit élément de maintien de bourrelet et ladite section de logement est attachée, de manière fixe, à ladite tourelle, ou vice versa.

4. Dispositif selon l'une quelconque des revendications précédentes, dans lequel lesdits éléments de maintien de bourrelet comprennent un élément de sollicitation pour appliquer une force de serrage sur un bourrelet afin de maintenir ledit bourrelet.

5. Dispositif selon l'une quelconque des revendications précédentes, dans lequel chaque bras comprend en outre une liaison mécanique raccordée audit élément de maintien de bourrelet et s'étendant dudit élément de maintien de bourrelet vers ledit axe d'indexation, dans lequel ladite liaison est mobile par rapport audit élément de maintien de bourrelet pour amener ledit élément de maintien de bourrelet à adopter une configuration de serrage ou une configuration sans serrage.

6. Dispositif selon la revendication 5, comprenant en outre un actionneur de liaison agencé en rotation, de manière fixe par rapport audit bâti, pour entraîner un mouvement de ladite liaison mécanique afin d'amener l'un desdits éléments de maintien à adopter une configuration de serrage ou une configuration sans serrage, de préférence lorsque ladite tourelle est dans l'une desdites une ou plusieurs positions prédéterminées, de préférence dans lequel l'actionneur de liaison est agencé sur ledit bâti, et dans lequel ledit actionneur de liaison est agencé pour pousser lesdits éléments de maintien de bourrelet dans une configuration de serrage afin de serrer un bourrelet ou une configuration sans serrage afin de libérer un bourrelet.

7. Dispositif selon la revendication 6, dans lequel, lorsque ladite tourelle n'est pas dans l'une desdites une ou plusieurs positions prédéterminées, ladite liaison mécanique est sensiblement découplée dudit actionneur de liaison.

8. Dispositif selon la revendication 6 ou 7, dans lequel chaque liaison mécanique desdits bras comprend une extrémité distale faisant face audit axe d'indexation, dans lequel ledit actionneur de liaison est agencé, au moins en projection sur un plan normal audit axe d'indexation, dans une zone couverte par lesdites extrémités distales desdites liaisons mécaniques.

9. Dispositif selon la revendication 6, 7 ou 8, dans lequel ledit actionneur de liaison comprend une cale qui est mobile pour entraîner un mouvement de ladite liaison mécanique d'au moins l'un desdits bras lorsque ladite tourelle est dans l'une desdites une ou plusieurs positions prédéterminées.

10. Dispositif selon l'une quelconque des revendications précédentes, dans lequel ledit bâti comprend un guide définissant une trajectoire de guidage circonférentielle, ledit guide comprenant une ou plusieurs sections de guidage mobiles par rapport à ladite trajectoire de guidage,
dans lequel lesdits bras comprennent des éléments suiveurs adaptés pour coopérer avec ledit guide, et dans lequel le mouvement desdits éléments suiveurs est sensiblement confiné par ledit guide.

11. Dispositif selon la revendication 10, comprenant en outre un actionneur de guidage pour déplacer au moins l'une desdites une ou plusieurs sections de guidage dudit guide par rapport à ladite trajectoire de guidage, de préférence dans lequel ledit actionneur est agencé en rotation, de manière fixe, par rapport audit bâti.

12. Dispositif selon la revendication 10 ou 11, dans lequel le guide est adapté pour confiner le mouvement de l'élément suiveur dans une direction à distance de l'axe d'indexation, et/ou dans lequel ledit guide est sensiblement fixe, en rotation, par rapport audit bâti, et/ou dans lequel ledit guide est un anneau de guidage et ladite trajectoire de guidage est une trajectoire circulaire ayant un centre, dans lequel lesdites une ou plusieurs sections de guidage sont radialement mobiles par rapport audit centre.

13. Dispositif selon la revendication 10, 11 ou 12, dans lequel ladite tourelle comprend un élément de butée pour venir en butée contre ledit bras et agencé pour confiner le mouvement de l'élément suiveur dans une direction vers ledit axe d'indexation.

14. Dispositif selon l'une quelconque des revendications 10 à 13, dans lequel ledit guide comprend une partie interne pour confiner le mouvement dudit élément suiveur vers ledit axe d'indexation, et une partie externe espacée de ladite partie interne pour confiner le mouvement dudit élément suiveur à distance dudit axe d'indexation.

15. Dispositif selon l'une quelconque des revendications précédentes, dans lequel, lorsque ladite tourelle n'est pas dans l'une desdites une ou plusieurs positions prédéterminées, lesdits éléments de maintien de bourrelet sont sensiblement découplés des actionneurs pour actionner lesdits éléments de maintien de bourrelet pour adopter une position et/ou une configuration par rapport à ladite tourelle.

16. Dispositif selon l'une quelconque des revendications précédentes, comprenant en outre un moteur pour entraîner la rotation de la tourelle autour de l'axe d'indexation, de préférence dans lequel ledit moteur est agencé sur ledit bâti et dans un agencement d'entraînement direct pour entraîner une rotation de la tourelle.

17. Dispositif selon l'une quelconque des revendications précédentes, dans lequel ladite tourelle est dépourvue d'actionneurs et/ou de couplages rotatifs avec ledit bâti pour entraîner lesdits éléments de maintien de bourrelet pour adopter une position et/ou une configuration par rapport à ladite tourelle.

18. Ensemble de formage de sommet de bourrelet comprenant un dispositif selon l'une quelconque des revendications précédentes, comprenant en outre plusieurs postes de travail agencés autour dudit dispositif, dans lequel au moins l'un de ladite pluralité de postes de travail est agencé pour fournir un bourrelet sensiblement circulaire à au moins l'un desdits bras, et dans lequel au moins l'un de ladite pluralité de postes de travail est agencé pour appliquer un sommet audit bourrelet.
